# EUROPEAN PATENT SPECIFICATION

(11) **EP 3 270 567 B1**
(45) Date of publication and mention of the grant of the patent: **03.07.2019**
(21) Application number: 16179218.9
(22) Date of filing: 13.07.2016
(51) Int. Cl.: H04L 29/08, H04W 4/38, H04W 4/70, G01D 21/00

(54) **METHOD, SYSTEM AND COMPUTER PROGRAM FOR FAIL-PROOF SENSOR ARRANGEMENT**
VERFAHREN, SYSTEM UND COMPUTERPROGRAMM FÜR AUSFALLSICHERE SENSOR ANORDNUNG
PROCÉDÉ, SYSTÈME ET PROGRAMME INFORMATIQUE POUR ARRANGEMENT DE CAPTEURS RÉSISTANT AUX DÉFAILLANCES

(43) Date of publication of application: 17.01.2018
(73) Proprietor: Bayerische Motoren Werke Aktiengesellschaft, 80809 München (DE)
(72) Inventor: Balagtas-Fernandez, Dr. Florence, 81543 München (DE); Grimm, Stev, 81673 München (DE); Marcial-Simon, Enrique, 97209 Veitshöchheim (DE)

(56) References cited:
- US-A1- 2009 118 841
- US-A1- 2014 009 275
- US-A1- 2016 048 399

## Description

The present invention is directed towards a method for improving stability of sensor arrangements in a vehicle board system by using fallback sensors, and a respective control device along with a computer program. The present invention allows a robust operation of sensor arrangements as upon failures of single sensors further sensors providing similar data are addressed.

The technical field of the present invention is generally the provision of reliable sensor data, especially in vehicles. According to the ongoing development of electronic control technologies and sensor control, a variety of advanced electronic control technologies are applied so that the vehicle has gradually become advanced and high-tech. To this end, in order to provide more improved stability, efficiency and comfort of traveling to a driver, the structure of the vehicle, such as a car, including sensor control has gradually become more complicated and intertwined.

According to a known method, a vehicle communication network between a conventional sensor and an electronic control unit may be established through a wired network inside a vehicle, such as a controller area network (CAN), a local interconnect network (LIN), a media oriented system transport or may be established through a wireless network such as Bluetooth.

US 2016/048399 A1 teaches a sensor, including sensor virtualization, sensor selection, sensor interaction, sensor adaptation, and employment of a set of sensors.

US 2009/118841 A1 teaches computer based virtual sensor techniques and, more particularly, to virtual sensor network systems and methods.

US 2014/0009275 A1 shows systems and methods for a vehicle monitoring service.

US 2015/0350750 A1 shows a vehicle wireless sensor network system, in which a plurality of vehicle wireless sensor nodes mounted in an arbitrary position of a vehicle may detect information about the vehicle, a vehicle base station may transmit information collected from each of the vehicle wireless sensor nodes to an electronic control unit (ECU) of the vehicle when the collected information is required for providing safety and convenience services of the vehicle.

US 6755276 B2 teaches to produce an additional fallback level if both the angle sensors at the steering wheel fail. Hence there is an advantageous increase in system availability. However, ranking at runtime of data using an evaluation metric in mashup networks is not disclosed amongst others.

US 2009/0312033 A1 teaches a data mashup service for various data types, including location dependent and mobility-aware data such as GPS location and surrounding maps. Other potential uses include business applications to track personnel, delivery vehicles and so forth.

Known algorithms, methods and systems for connecting to a data provider are hard coded and some of the corresponding data is transferred as is to a backend server for further evaluation and application logic.

In case that some data providers are substituted by others, the properties of the data might be different, and the backend server might have to work with them differently as they are .e.g. not so trustful, accurate or the like.

In a modern vehicle many user functions, which require data sets from sensors and other data providers, are offered. These data sets are processed and combined in a network to achieve the desired function. However, problems arise in case one sensor does not deliver data anymore or lacks accuracy due to environmental impacts. In such a case the required functionality is not available anymore.

Especially in the automotive domain highly reliable architectures are required, which connect several sensors for providing driver assistance or for security means. According to known approaches it may be the case that the vehicle needs to be repaired and has to be brought to a repair shop or service partner.

Accordingly, it is an object of the present invention to provide a method for improving stability of sensor arrangements and a control unit which as respectively arranged. Hence, in case a functionality cannot be provided anymore the vehicle should find solutions on its own without immediate necessity to consult a service partner. It is furthermore an object of the present invention to provide a computer program with instructions implementing the suggested method.

This object is solved by a method comprising the features of the independent claim 1. Further advantages and technical effects are provided by the dependent claims.

Accordingly, a method for improving stability of sensor arrangements is suggested comprising the step of ranking obtained sensor data from at least one sensor as a function of a stored evaluation metric, wherein further sensor data is obtained from at least one sensor of which obtained sensor data is being ranked the highest.

The present invention aims at improving the stability of sensor arrangements as in case one sensor fails to provide data a further sensor is read out. The same applies if a sensor does not establish availability of highly accurate data. In the first case where the sensor completely fails to deliver data the accuracy is completely absent. In the second case a threshold may be provided indicating a measurement for accuracy which has to be met. If the threshold value is not met, further sensors are read out. If a sensor fails, then appropriate error messages are visible in the vehicle and also alert sounds are triggered. One or more functions do not work at all anymore.

In the same fashion a ranking of obtained sensor data can be accomplished according to an aspect of the present invention. Accuracy can be measured for all sensors and in case a threshold is not met the respectively next sensor providing the best quality data is read out. The best sensor is determined as a function of an evaluation metric. Such a metric may be stored in the device itself or remotely accessed.

At least one sensor is required for accomplishing the technical teaching of the present invention. Implicitly this discloses several sensors, which can be arranged remotely. They can for instance be arranged in several vehicles. In case a rain sensor fails in one car, the rain sensor for a further vehicle traveling close by can be used instead. This provides the best sensor for the first vehicle, as its own failed and is therefore ranked worse than a further sensor. The further sensor is ranked better as it delivers accurate data and is near enough to provide rain data which also apply for the vehicle holding a broken sensor.

It may further be the case that a first car merely operates an old sensor and a second car operates an up-to-date sensor. Instead of using its own sensor the first car could use the up-to-date sensor delivering the same type of data. Accordingly, to up-to-date sensor is ranked higher. If both cars travel away from each other the respectively other sensor may be ranked worse with increasing distance. It may also be of advantage to consider several parameters for ranking sensors. The selection of sensors considers the required functionality to be provided.

The stored evaluation metric being required for ranking can be commonly shared among several vehicles or stored locally in a vehicle. It may furthermore be of advantage to provide such a metric by means of a server being accessed over an internet connection.

Once the sensors are ranked, sensor data being ranked the highest is chosen for providing functionality. The ranking can be performed constantly or in specific situations. For instance, if a sensor fails or delivers data quality below a certain threshold the suggested method may be triggered and an alternative sensor is read out.

According to an aspect of the present invention the stored evaluation metric ranks the obtained sensor data based on at least one of a group of parameters, the group comprising: stored sensor behavior, accuracy, frequency of updates and a user assigned trust value. This provides the advantage that one or several parameters can be considered reaching a situation specific ranking of sensors. It is of special advantage that any combination of the aforementioned parameters can be combined for evaluating a sensor or several sensors.

According to a further aspect of the present invention the further sensor data corresponds to the obtained sensor data. This provides the advantage that the sensor does not necessarily provide the same data as a failed sensor but rather the data merely need to correspond. For instance, in case a rain sensor fails, a wiper delay control switch may be read out indirectly indicating the intensity of rain. Hence, the obtained data but not the sensors correspond.

According to a further aspect of the present invention the method comprises a step of providing rules indicating which of the at least one sensor provides specific sensor data. This provides the advantage that several sensors can jointly or alternatively provide sensor data. In case a first sensor fails to deliver specific data a second sensor can be found based on the rules which delivers the specific data instead of the first data.

According to a further aspect of the present invention several sensors are provided being arranged across several devices. This provides the advantage that the best sensors can be chosen for providing data among a variety of sensors.

According to a further aspect of the present invention, obtaining sensor data comprises a step of wirelessly receiving sensor data. This provides the advantage that several sensor data can be obtained over the air from further vehicles, base stations or mobile phones.

According to a further aspect of the present invention, obtaining sensor data comprises a step of applying statistical functions for predicting sensor data. This provides the advantage that sensor data to be expected in the future can be considered even for ranking sensors.

According to a further aspect of the present invention a step of receiving the evaluation metric from a server is accomplished. This provides the advantage that the evaluation metric can be downloaded and can furthermore be maintained centrally on a server. The server can be updated for all connected vehicles and can implement further functionality. Hence, the suggested approach is hardware efficient. The object is also solved by a control device for improving stability of sensor arrangements comprising the features of the independent claim 5.

The object is also solved by a computer program comprising instructions for implementing the suggested method when executed on a computer.

It is of special advantage that the method as suggested above can be executed using structural features of the suggested device and control unit. Accordingly, the method teaches steps which are arranged to operate the suggested device. Furthermore, the device comprises structural features allowing the accomplishment of the suggested method. In addition, a computer program and a computer program product respectively is suggested comprising instructions which perform the suggested method when executed on a computer or the device according to the present invention. Furthermore, the instructions provide means for implementing the structural features of the claimed device. Accordingly, an operable image of the structural features of the device can be created. Likewise, an arrangement comprising the structural device features is provided.

The invention will now be described merely by way of illustration with reference to the accompanying drawings:
- Figure 1: shows a schematic block diagram of a Mashup network according to an aspect of the present invention;
- Figure 2: shows a further schematic block diagram of a Mashup network being adapted according to an aspect of the present invention;
- Figure 3: shows an application scenario according to an aspect of the present invention; and
- Figure 4: shows a further application scenario according to an aspect of the present invention.

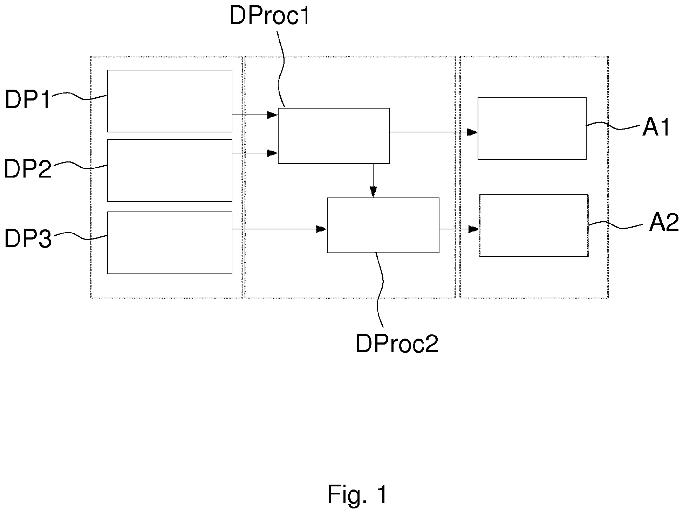

Figure 1 shows a schematic block diagram of a Mashup network which serves as an application scenario of the present invention. According to an aspect of the present invention on the left hand side sensors as data providers are depicted, in the middle the instructions are shown and on the right hand side the resulting vehicle information is demonstrated.

The sensors on the right hand side may also be referred to as data providers and are therefore assigned the reference signs DP1, DP2 and DP3. The instructions in the middle connect the data processors DP1, DP2 and DP3. Accordingly, these instructions are named data processors DProc1 and DProc2. The resulting vehicle information can be used by further applications A1 and A2

For providing a specific information such as a vehicle information a variety of sensor data is read out for retrieving the respective raw data. For doing so a so called Mashup network is suggested. Each sensor DP1, DP2 and DP3 is for instance named data provider. The general goal is to provide information such as the application or User function information. The sensors or generally data providers which can be remotely arranged and need not to be implemented in one single car, although this might be the typical case. It may be of advantage to distribute the sensors among several cars and even use sensors of further devices. Such a further device may for instance be a smart phone or in general a mobile device. The sensors DP1, DP2 and DP3 may be arranged to directly or indirectly communicate with each other. In this fashion widely spread sensors can be read out for obtaining larger amounts of raw data. According to an aspect of the present invention those data providers, which are sensors, can be read out interchangeably in case they provide the same type of data.

The architecture as being shown in figure 1 can be implemented using at least one car, wherein also further devices, such as a server, may be applied. Accordingly, abstract layers can be implemented and deployed across several hardware platforms. The Data Processors DProc1, DProc2 can be handled in the same way according to an aspect of the present invention like sensors themselves, as the Data Processors deliver data items as well. While the sensors DP1, DP2 and DP3 measure data the Data Processors connect the gathered data and deliver composed data.

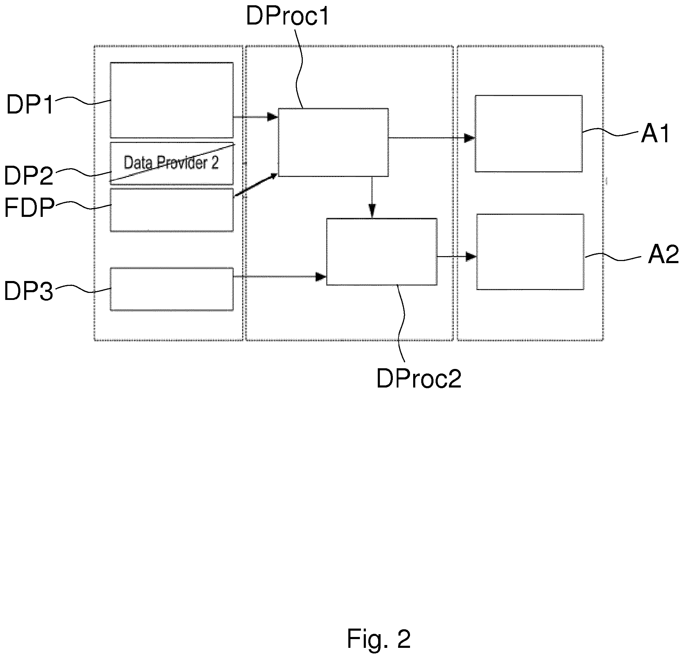

Figure 2 shows a block diagram demonstrating a so called fallback data FDP provider or fallback sensor. In case Data Provider 2 does not work accurately the Fallback Data Provider FDP can be used instead. The respective data processor DP1, DP2 and DP3 receives the information, which is of the same data type as previously provided by Data Provider 2. Accordingly, the failure is hidden as the Data Processor now operates using the data being provided by the fallback sensor.

In the following it will be described what is meant by a Mashup Network, which provides an aspect of the invention. Each of the components can be part or jointly form a Mashup Network. For example, traffic jam detection is done by comparing an expected speed to the current speed. The setpoint speed is calculated by a set of algorithms. Each of those algorithms bases on things like weather conditions, road conditions or country. For the sake of extensibility, the overall traffic detection algorithm must not be hard-coded to just use the mentioned setpoint speed elements; it shall rather be an extensible architecture. For example, in future one might want to additionally consider aspects of the driver's personality, e.g. tends to speed-up before traffic lights, to calculate the setpoint speed. Another important thing to consider is that the setpoint speed algorithm elements may also be of use to other applets and therefore must not be designed such that they are only usable in the traffic context.

This requirement is achievable by splitting the overall algorithm into tiny parts, each with a distinct function. Each of those parts is encapsulated in an own class. All those classes follow the same interface. The overall algorithm is finally composed by interconnecting those classes again in a plug-and-play fashion or automatically.

This approach results in a 'network' of classes that can connect to one another and use each other's outputs to do calculations in order to achieve higher-value information. Such behavior is called Mashup; therefore, those individual classes can be named Mashup Processors.

For example, in case there is a class that calculates the precipitation condition. It's got a set of inputs (wiper activity, rain sensor, thermo-meter, and further more) and one or more semantically similar outputs (rain strength, snow, ...). This class interface has got no traffic specifics and can therefore easily be reused elsewhere.

For that reason, a framework has been developed which provides the possibility to connect system components to each other in such a way that the previously mentioned problem is solved, among other aspects.

The overall idea of the invention is, to use fallback data providers in a Mashup Network, if the original data provider fails to deliver this data set. The invention can be divided into different aspects:
Choosing another data provider which provides the same (raw) data or choosing a component which derives the required data from other data providers, which can be called data processor. Furthermore, a data processor might generate new information not only out of data provider, but also other data processors, hierarchically.

The data provider and data processors can be provided within a certain component or in another certain component which is a software component or a hardware component. And the connection can be implemented as a function call as well as a communication path like TCP/IP, CAN-BUS, wired or wireless via WLAN, Bluetooth, GSM, etc. which ensures that the functionality can be distributed over several hardware components, so distributed system.

The data providers and data processors are prioritized based on different kind of quality aspects and properties like accuracy, frequency of updates, trust value, etc.

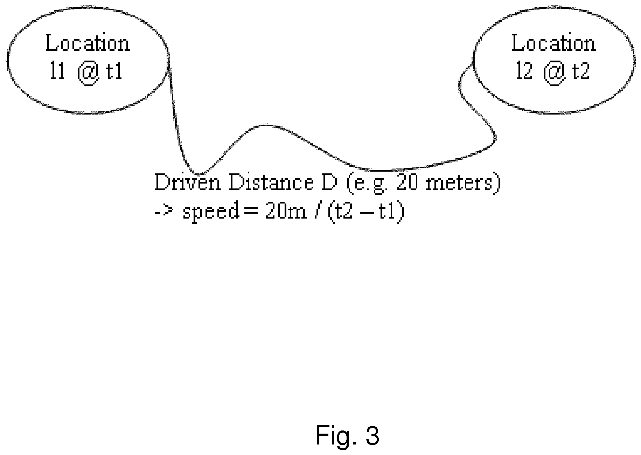

Figure 3 shows an application domain of the present invention and describes aspects of the invention. Assume the data provider for speed is not working anymore or update frequency is too slow. Then a data processor could exist which generates those information based on other data providers. E.g. a data provider for Geolocation and a data provider for driven distance.

Based on the difference of Location l1 @t1 and l2@t2 received from ECU 1 and the difference of the driven distance d1 @t1 and d2@t2 received from ECU 2, the speed can also be derived.

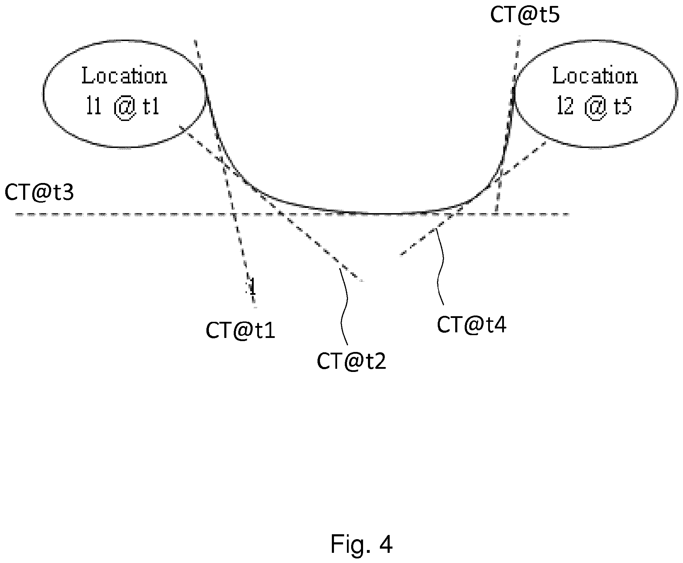

Figure 4 shows the application domain with reference to figure 3 of the present invention and describes aspects of the invention. Assume the data provider for speed is not working anymore or the update frequency is too slow. Then a data processor could exist which generates those information based on other data providers. E.g. a data provider for Geo location and a data processor for calculated trajectory. Based on the difference of Location l1 @t1 and l2@t5 received from ECU 1 and a calculated trajectory based on GeoDirection of car for timestamp within [t1, t5] the driven curve as well as the driven distance can be calculated and therefore finally also the speed. In figure 4 the respective Correction Trajectories CT are indicated for the each point in time, namely CT@t1, CT@t2, CT@t3, CT@t4 and CT@t5.

This mechanism and redundancy provides a better availability, and higher stability of the system. Specific data provider compositions for speed data help to still provide important information for e.g. navigation, safety etc.

One further aspect of the invention is to give each data set in the Mashup Network a trust figure. In dependency of this figure, the Mashup processes are performed:
The system provides a 'trust' figure for each datum the Mashup Providers provide. This 'trust' will indicate to the receiver (backend server) how likely the reported data is true and therefore reliable.
- The trust is influenced by the number of Mashups Processors in between. On whether the info is 1 st hand (e.g. rain sensor -> SO DIRECT) or 2nd hand (e.g. guessing the rain level based on windshield wiper activity -> INDIRECT)
- By the age of an information item or an expiry date

Instead of a configuration the priority (trust value) might also be determined based historic data and statistics. E.g. this could be computed right in the vehicle or also in the backend server. With data from direct source a data from other indirect sources, the quality of the indirect sources can be evaluated for the whole lifetime.

The result of this evaluation might be an updated trust figure which could also be propagated back to the Mashup network or processor. So, the organization of the Mashup network could also be influenced by evaluations of the backend server. This would be a feedback function for the trust figure, to help finding the correct trust figures for the future.

Additionally, crowd sourced data could be used for generating the trust figure. The value depends on the data sources from other vehicles, which are delivering the same sensor data. If the values of the sensor data differ, the trust figure will decline.

Accordingly, this provides means for implementing the evaluation metric. The parameters as set forth above can then be used for ranking the data and implicitly rank the respective sensors. For instance, only those sensors providing very reliable or very new data will be used for acquiring further sensor data.

Along with a control device it is furthermore suggested to implement a sensor arrangement including a control apparatus for improving stability of the sensor arrangement. Furthermore, a ranking device is suggested providing means being arranged to rank obtained sensor data of at least one sensor as a function of a stored evaluation metric. Accordingly, a data memory, may it be locally arranged or distributed, is suggested likewise.

The control apparatus is arranged such that further sensor data is obtained from the at least one sensor of which the sensor data is being ranked the highest. Furthermore, ranking results can be achieved and computed jointly by several control devices. In this fashion vehicles can cooperate and find optimal sensors for specific tasks. It may be of advantage to consider the distances between vehicles for selecting sensors.

Another aspect is the evaluation of sensor chains or joint sensor data provision. Accordingly, the evaluation metric may recognize if data is directly provided are if already processed data is gathered. One further way for implementing the metric is to read out sensor data from several redundant sensors and let the majority decide what data is to be expected. Hence accuracy can be evaluated as a function of several data inputs and the measure for deviation describes the accuracy. In case one sensor completely fails the deviation is high and therefore the accuracy is low.

Summarizing the above a method for improving stability of sensor arrangements, a respective control device and control device/ sensor arrangement along with a computer program is suggested. The present invention allows a robust operation of sensor arrangements as upon failures of single sensors further sensors providing similar data are addressed dynamically at runtime. Hence, upon failures the system can proactively react and the driver does not need to immediately consult a service partner. Furthermore, it can be guaranteed that always the optimal sensor is chosen in every specific situation.

## Claims

1. A method for improving stability of sensor (DP1, DP2, DP3) arrangements in a vehicle board system by using fallback sensors (FDP) and composite sensors, comprising the step of ranking obtained sensor data from several sensors (DP1, DP2, DP3) arranged in several vehicles as a function of a stored evaluation metric, wherein further sensor data is obtained from the at least one sensor (FDP) of which to obtained sensor data is ranked the highest, wherein obtaining sensor data comprises a step of applying statistical functions for predicting sensor data and wirelessly receiving sensor data, **characterized in that** a step of receiving the evaluation metric from a server is accomplished and the evaluation metric is maintained centrally on the server, wherein the stored evaluation metric ranks the obtained sensor data based on stored sensor behavior.

2. The method according to claim 1, **characterized in that** the further sensor data corresponds to the obtained sensor data.

3. The method according to claim 1 or 2, **characterized in that** the method comprises a step of providing rules indicating which of the at least one sensor (DP1, DP2, DP3) provides specific sensor data.

4. A control device for improving stability of sensor arrangements in a vehicle board system by using fallback sensors and composite sensors, including means being arranged to rank obtained sensor data of several sensors arranged in several vehicles as a function of a stored evaluation metric, wherein the control device is arranged such that further sensor data is obtained from the at least one sensor of which the sensor data is ranked the highest, wherein obtaining sensor data comprises a step of applying statistical functions for predicting sensor data and wirelessly receiving sensor data, **characterized in that** receiving the evaluation metric from a server is accomplished and the evaluation metric is maintained centrally on the server, wherein the stored evaluation metric ranks the obtained sensor data based on stored sensor behavior.

5. A computer program comprising instructions for implementing the method of any one of claims 1-3 when executed on a computer.

## Patentansprüche

1. Verfahren zur Verbesserung der Stabilität von Anordnungen von Sensoren (DP1, DP2, DP3) in einem Fahrzeugbordsystem unter Verwendung von Ersatzsensoren (FDP) und Verbundsensoren, umfassend den Schritt des Einstufens von erhaltenen Sensordaten mehrerer Sensoren (DP1, DP2, DP3), die in mehreren Fahrzeugen angeordnet sind, als eine Funktion einer gespeicherten Evaluierungsmetrik, wobei zusätzliche Sensordaten von dem mindestens einen Sensor (FDP), dessen zu erhaltende Sensordaten als die höchsten eingestuft werden, erhalten werden, wobei das Erhalten von Sensordaten einen Schritt des Anwendens von statistischen Funktionen zum Vorhersagen von Sensordaten und des drahtlosen Empfangens von Sensordaten umfasst, **dadurch gekennzeichnet, dass** ein Schritt des Empfangens der Evaluierungsmetrik von einem Server durchgeführt wird und die Evaluierungsmetrik zentral auf dem Server verwaltet wird, wobei die gespeicherte Evaluierungsmetrik die erhaltenen Sensordaten basierend auf gespeichertem Sensorverhalten einstuft.

2. Verfahren nach Anspruch 1, **dadurch gekennzeichnet, dass** die zusätzlichen Sensordaten den erhaltenen Sensordaten entsprechen.

3. Verfahren nach Anspruch 1 oder 2, **dadurch gekennzeichnet, dass** das Verfahren einen Schritt des Bereitstellens von Regeln umfasst, die angeben, welcher des mindestens einen Sensors (DP1, DP2, DP3) spezifische Sensordaten bereitstellt.

4. Steuereinrichtung zur Verbesserung der Stabilität vom Sensoranordnungen in einem Fahrzeugbordsystem unter Verwendung von Ersatzsensoren und Verbundsensoren, einschließlich Mitteln, die dazu eingerichtet sind, erhaltene Sensordaten mehrerer Sensoren, die in mehreren Fahrzeugen angeordnet sind, als eine Funktion einer gespeicherten Evaluierungsmetrik einzustufen, wobei die Steuereinrichtung derart eingerichtet ist, dass zusätzliche Sensordaten von dem mindestens einen Sensor, dessen Sensordaten als die höchsten eingestuft werden, erhalten werden, wobei das Erhalten von Sensordaten einen Schritt des Anwendens von statistischen Funktionen zum Vorhersagen von Sensordaten und des drahtlosen Empfangens von Sensordaten umfasst, **dadurch gekennzeichnet, dass** das Empfangen der Evaluierungsmetrik von einem Server durchgeführt wird und die Evaluierungsmetrik zentral auf dem Server verwaltet wird, wobei die gespeicherte Evaluierungsmetrik die erhaltenen Sensordaten basierend auf gespeichertem Sensorverhalten einstuft.

5. Computerprogramm, das Anweisungen zur Implementierung des Verfahrens nach einem der Ansprüche 1-3 bei deren Ausführung auf einem Computer umfasst.

## Revendications

1. Procédé permettant d'améliorer la stabilité d'agencements de capteurs (DP1, DP2, DP3) dans un système embarqué dans un véhicule en utilisant des capteurs de repli (FDP) et des capteurs composites comprenant une étape consistant à classer des données de capteur provenant de plusieurs capteurs (DP1, DP2, DP3) montés dans plusieurs véhicules en fonction d'une métrique d'évaluation enregistrée, d'autres données de capteur étant obtenues à partir du capteur (FDP) dont les données de capteur obtenues sont classées au rang le plus élevé, l'obtention des données de capteur comprenant une étape d'application de fonctions statistiques pour prévoir des données de capteurs et de réception des données de capteur par une liaison sans fil,
**caractérisé en ce qu'**
une étape de réception de la métrique d'évaluation à partir d'un serveur est mise en oeuvre, et la métrique d'évaluation est maintenue centralement sur le serveur, la métrique d'évaluation enregistrée, classant les données de capteur obtenues sur le fondement du comportement du capteur enregistré.

2. Procédé conforme à la revendication 1,
**caractérisé en ce que**
les autres données de capteur correspondent aux données de capteur obtenues.

3. Procédé conforme à la revendication 1 ou 2,
**caractérisé en ce qu'**
il comprend une étape consistant à se procurer des règles indiquant lequel des capteurs (DP1, DP2, DP3) fournit des données de capteur spécifiques.

4. Dispositif de commande permettant d'améliorer la stabilité d'agencements de capteurs dans un système embarqué dans un véhicule en utilisant des capteurs de repli et des capteurs composites comprenant des moyens agencés pour classer des données de capteur provenant de plusieurs capteurs montés dans différents véhicules en fonction d'une métrique d'évaluation enregistrée, le dispositif de commande étant réalisé de sorte que d'autres données de capteur soient obtenues à partir du capteur dont les données de capteur sont classées avec le rang le plus élevé, l'obtention des données de capteur comprenant une étape d'application de fonctions statistiques pour prévoir les données de capteurs et de réception des données de capteurs par une liaison sans fil,
**caractérisé en ce que**
la réception de la métrique d'évaluation à partir d'un serveur est effectuée, et la métrique d'évaluation est maintenue centralement sur le serveur, la métrique d'évaluation enregistrée classant des données de capteur obtenues sur le fondement du comportement du capteur enregistré.

5. Programme d'ordinateur comprenant des instructions permettant la mise en oeuvre du procédé conforme à l'une des revendications 1 à 3, lorsqu'il est exécuté sur un ordinateur.
